# FASCICULE DE BREVET EUROPEEN

(11) **EP 0 429 518 B1**
(45) Date de publication et mention de la délivrance du brevet: **12.10.1994**
(21) Numéro de dépôt: 89909581.4
(22) Date de dépôt: 11.08.1989
(51) Int. Cl.: H04M 11/06

(54) **PROCEDE ET DISPOSITIF DE STOCKAGE SELECTIF ET DE TRANSMISSION D'INFORMATIONS SUR UNE LIGNE TELEPHONIQUE**
VERFAHREN UND VORRICHTUNG ZUR SELEKTIVEN SPEICHERUNG UND ZUR NACHRICHTENÜBERTRAGUNG ÜBER EINE FERNSPRECHLEITUNG
METHOD AND DEVICE FOR THE SELECTIVE STORAGE AND TRANSMISSION OF INFORMATION THROUGH A TELEPHONE LINE

(30) Priorité: 18.08.1988 FR 8811000
(43) Date de publication de la demande: 05.06.1991
(73) Titulaire: I.M.S. FRANCE (INFORMATIONS MEDICALES & STATISTIQUES), F-92542 Montrouge Cedex (FR)
(72) Inventeur: HARDRE, Jean-Marie, F-75002 Paris (FR)
(74) Mandataire: Pontet, Bernard
(86) Numéro de dépôt international: FR8900420
(87) Numéro de publication internationale: WO9002462

(56) Documents cités:
- US-A- 4 345 113
- US-A- 4 713 837
- IBM Technical Disclosure Bulletin, vol. 23, no. 11, April 1981 (New York, US), pages 5023-5024; G.R. Alspaugh et al.: "Buffered an unattended dial unit"

## Description

La présente invention concerne un procédé de stockage et de transmission d'informations codées sur une ligne téléphonique.

L'invention vise également le dispositif mettant en oeuvre le procédé précité.

L'invention trouve un domaine préféré d'application dans l'étude des achats de médicaments au niveau des officines pharmaceutiques.

Les coûts très élevés de recherche et de dévelopement, de mise sur le marché et de publicité de nouveaux médicaments incitent de plus en plus les laboratoires pharmaceutiques à cerner de façon précise le marché des spécialités pharmaceutiques et tout particulièrement son évolution dans le temps et dans l'espace. Il faut pour cela disposer de données statistiques fiables fournissant une "photographie" instantanée des données du marché en termes de vente de chaque spécialité pharmaceutique dans les différents points de vente.

Le système de distribution des spécialités pharmaceutiques est organisé autour de centrales de répartition qui approvisionnent les officines où la vente au détail est effectuée.

Une technique de recueil d'informations sur les ventes de spécialités pharmaceutiques (actuellement) consiste à recueillir les factures d'un ensemble d'officines formant un échantillon représentatif de l'ensemble des officines d'un territoire donné, à les microfilmer, puis à les acheminer dans un centre de traitement unique où les informations extraites de l'ensemble de ces factures sont saisies manuellement par des opérateurs pour être traitées à des fins statistiques.

Cependant, ce procédé est très lourd et très coûteux. En effet, l'organisme chargé de l'étude de marché doit organiser des tournées complexes de recueil des factures dans les officines sélectionnées puis doit restituer ces factures aux pharmaciens. De plus, l'acheminement des documents microfilmés occasionne inévitablement des délais entre la saisie initiale des factures et leur traitement, diminuant alors la fiabilité de l'étude.

La nécessité d'employer un personnel nombreux affecté uniquement à la saisie des données dans le centre de traitement rend l'opération très coûteuse.

Par ailleurs, la grande majorité des officines pharmaceutiques est déjà équipée de dispositifs de commande par téléphone permettant de transmettre à une ou plusieurs centrales de répartition, des commandes de spécialités pharmaceutiques. La figure la représente un type d'installation utilisé couramment dans les officines pharmaceutiques.

Un terminal de commande 11, appelé familièrement "soucoupe", est connecté à la ligne téléphonique 2 de l'officine par une prise gigogne 13a couplée à la prise gigogne 13b d'un combiné téléphonique 12 et insérée dans la prise téléphonique 17. La ligne téléphonique 2 est reliée au réseau téléphonique public 7 auquel sont aussi reliés des terminaux R₁, ..., Rₘ des différentes centrales de répartition.

L'ensemble constitué par le terminal de commande 11 et le combiné téléphonique 12 forme alors un dispositif émetteur spécialisé E. Les informations transmises sont :
- le numéro d'identification de l'officine, généré par le terminal de commande 11,
- le code de la spécialité pharmaceutique à commander, lu sur une carte perforée associée à la spécialité par un lecteur optique inclus dans le terminal de commande, après insertion de cette carte dans la fente 11a du lecteur optique,
- la quantité à commander, frappée au clavier du terminal de commande 11 par le pharmacien.

Ces informations codées suivant un protocole de transmission spécifique sont transmises en mode asynchrone à une vitesse de transmission de 300 ou 1 200 bauds à destination du centre répartiteur concerné par la commande. Celui-ci émet en retour un accusé de réception pour indiquer par exemple les quantités et spécialités manquantes.

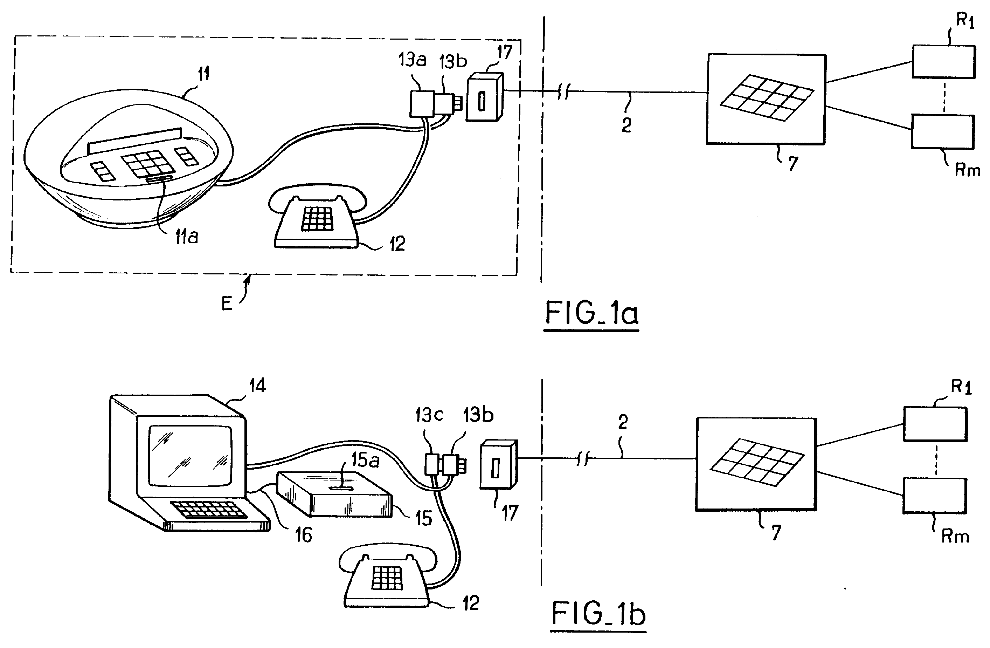

La figure 1b illustre un autre exemple de configuration d'un dispositif de commande par téléphone dans lequel un terminal vidéotexte 14, de type minitel, est utilisé en combinaison avec un combiné téléphonique 12 et un boîtier électronique 15 équipé d'un lecteur 15a et relié au terminal 14. Cette configuration présente l'avantage par rapport à la précédente de procurer un écran de visualisation plus grand permettant par exemple la visualisation de l'ensemble de la commande à transmettre.

Il s'agit donc de tirer parti de l'existence de ces installations de commande à distance dans une grande majorité d'officines pour pouvoir saisir directement à la source les informations concernant l'ensemble des commandes de spécialités pharmaceutiques émises par une officine, en s'affranchissant ainsi des problèmes actuels de recueil des factures, transfert sur microfilms, acheminement et traitement avec saisie manuelle.

Le brevet américain US-A- 713 837 divulgue un système d'acquisition de stockage et de transfert d'informations codées sur une ligne téléphonique, utilisé pour des relevés à distance de compteurs, pour du courrier électronique ou de la facturation électronique. Ce système utilise un réseau de communication existant mais ne permet pas un stockage sélectif d'informations spécifiques transitant sur une ligne téléphonique. Au contraire, dans ce système, des données de mesure sont acquises et collectées sur des canaux spécifiques en amont de modulateurs/démodulateurs (modem), ce qui ne permet pas de résoudre le problème de l'identification et de l'interception de données codées suivant un protocole de transmission spécifique qui transiteraient sur une ligne téléphonique.

L'article "IBM Technical Disclosure Bulletin Vol. 23 n° 11 Avril 1981" décrit un dispositif permettant le transfert de données préalablement collectées et stockées par un enregistreur portable vers un centre de traitement via un réseau téléphonique. Ce transfert est programmé à des instants prédéterminés, par exemple en dehors des heures ouvrables. Ce dispositif n'est pas prévu pour transférer des données qui transiteraient préalablement sur une ligne téléphonique.

Par ailleurs, on connaît déjà des techniques d'écoute téléphonique permettant par un branchement en parallèle sur une ligne téléphonique de saisir les informations transmises sur cette ligne. Ces techniques bien connues utilisent souvent des moyens de stockage d'informations, tels que des magnétophones, reliés aux moyens d'écoute mettant en oeuvre ces techniques. Un opérateur, affecté à ces fonctions d'écoute, effectue en général une sélection parmi les informations transmises sur la ligne, de celles méritant d'être stockées pour un traitement ultérieur. Cette sélection est en pratique effectuée sur des informations en phonie et introduit des critères parfois subjectifs liés aux objectifs de l'opération d'écoute. Or, dans l'application d'étude statistique à l'origine de la présente invention, les informations recherchées sont transmises sous forme codée et obéissent à des communications prédéterminées, Il s'agit donc de reconnaître de façon systématique ces protocoles dans le flot d'informations transmises sur la ligne concernée, stocker les informations utiles associées à ces protocoles et pouvoir les transmettre à un centre de traitement, sans nécessiter une structure lourde de collecte, d'acheminement et de saisie sur clavier.

Le but de la présente invention est de remédier à ces inconvénients en créant un procédé de stockage et de transmission d'informations codées sur une ligne téléphonique appartenant à un réseau de télécommunications.

Suivant l'invention, ce procédé comprend :
- une opération d'écoute systématique desdites informations transmises sur ladite ligne téléphonique,
- une opération d'identification de protocoles de transmission prédéterminés, l'identification de l'un desdits protocoles conduisant à
- une opération de stockage sélectif des informations transmises dans le cadre dudit protocole identifié, et
- une opération de transfert, à des instants prédéterminés programmés, desdites informations stockées sélectivement vers un destinataire relié audit réseau de télécommunications, via ladite ligne téléphonique.

Ainsi, les opérations d'identification de protocoles mises en oeuvre dans ce procédé permettent de distinguer dans un flot d'informations où se mêlent messages phoniques et messages numériques codés, les messages correspondant aux ordres de commande et réponses soumises dans le cadre de protocoles de transmission prédéterminés et de les stocker.

Ces informations sont ensuite transférées en utilisant comme vecteur de transmission, la ligne téléphonique elle-même, vers un destinataire qui peut être, par exemple, un centre de traitement statistique et d'étude de marché. Ainsi, toutes les étapes de collecte, d'acheminement et de saisie utilisées dans l'art antérieur sont remplacées par un procédé présentant un coût de fonctionnement très peu élevé et des performances de rapidité et de fiabilité bien supérieures.

Le fait que les opérations de transfert aient lieu à un instant prédéterminé permet de choisir des horaires de transfert à des moments de la journée, principalement la nuit, où ce transfert risque le moins possible d'encombrer la ligne téléphonique, qui dans la très grande majorité des officines, est utilisée pour toutes communications.

Suivant une version préférée de l'invention, lesdits protocoles de transmission prédéterminés correspondent à des échanges d'informations entre un dispositif émetteur spécialisé relié à ladite ligne téléphonique et une ou plusieurs unités de traitement d'informations reliées audit réseau de télécommunications.

Ainsi, le dispositif émetteur spécialisé, qui peut équiper une officine pharmaceutique communique avec des unités de traitement d'informations, en l'occurrence les centres répartiteurs, par la ligne téléphonique en employant un ou plusieurs protocoles de transmission prédéterminés.

Le système de transmission codée mettant en oeuvre le procédé conforme à l'invention comprend un dispositif émetteur spécialisé relié à ladite ligne téléphonique comportant des moyens d'entrée d'informations codées, des moyens de traitement desdites informations codées et des moyens pour transmettre lesdites informations codées sur ladite ligne téléphonique vers des unités de traitement d'information reliées audit réseau de télécommunications.

Suivant l'invention, il comprend en outre un dispositif de transfert sélectif différé, relié à ladite ligne téléphonique, pour transmettre, à des instants prédéterminés, lesdites informations codées vers au moins un destinataire prédéterminé relié audit réseau de télécommunications, via ladite ligne téléphonique.

Ce dispositif de transfert sélectif différé comprend :
- des moyens d'écoute systématique reliés à ladite ligne téléphonique,
- des moyens d'analyse et de sélection reliés auxdits moyens d'écoute, pour sélectionner parmi lesdites informations transmises sur la ligne et écoutées par lesdits moyens d'écoute, les informations codées correspondant à un protocole de transmission prédéterminé,
- des moyens de stockage reliés auxdits moyens d'analyse et de sélection pour stocker lesdites informations sélectionnées,
- des moyens de transmission, reliés auxdits moyens de stockage et à ladite ligne téléphonique pour transmettre, auxdits instants prédéterminés, lesdites informations codées préalablement sélectionnées et stockées, vers ledit destinataire.

Ce dispositif rassemble à la fois des moyens d'écoute systématique et des moyens de transmission reliés à la ligne téléphonique.

Les moyens d'écoute systématique ont pour fonction de fournir à des moyens d'analyse et de sélection, l'ensemble des informations transmises sur la ligne téléphonique pour identifier les informations transmises dans le cadre d'un protocole prédéterminé.

Le stockage de ces informations permet leur transfert différé vers le destinataire.

D'autres particularités et avantages de l'invention apparaîtront encore dans la description ci-après. Aux dessins annexés, donnés à titre d'exemples non limitatifs :
- la figure 1a représente une installation de transmission de commandes à distance, du genre actuellement utilisé dans des officines pharmaceutiques,
- la figure 1b représente une autre configuration connue d'installation de transmission de commandes,
- la figure 2 illustre une installation de transmission de commande comportant un dispositif de transfert sélectif différé conforme à l'invention,
- la figure 3 représente le schéma synoptique général du dispositif conforme à l'invention,
- la figure 4 est un schéma synoptique d'une version préférée du dispositif conforme à l'invention,
- la figure 5 est un schéma détaillé de la partie d'interface de ligne du dispositif représenté à la figure 3,
- la figure 6 est l'organigramme général du procédé conforme à l'invention,
- la figure 7 est l'organigramme détaillé de l'opération de transfert d'informations intervenant dans le procédé conforme à l'invention,
- la figure 8 est l'organigramme d'une étape de rappel ultérieur pouvant être effectuée lors d'une première utilisation du dispositif conforme à l'invention,
- la figure 9 est l'organigramme d'une étape de rappel ultérieur effectuée en cours de fonctionnement,
- la figure 10 est l'organigramme d'une étape de stockage des informations sélectionnées.

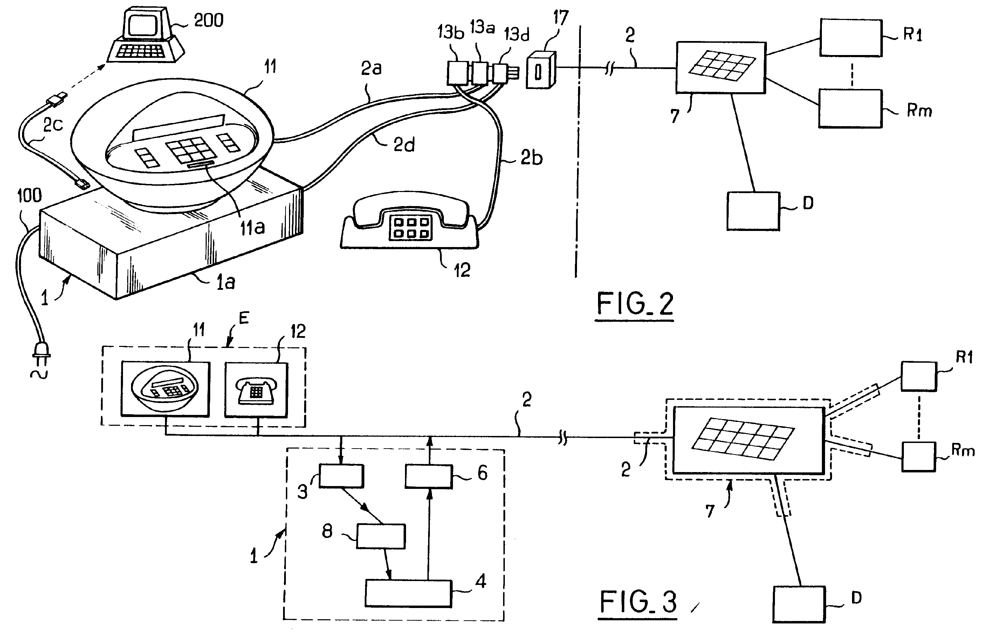

Dans la réalisation particulière de l'invention représentée à la figure 2, le système de transmission d'informations codées comporte un terminal de commande 11, tel que décrit précédemment, un combiné téléphonique 12 et un dispositif de transfert sélectif différé 1 inclus dans un boîtier 1a. Ces trois composants sont reliés à la ligne téléphonique 2 respectivement par les liaisons 2a, 2b, 2d munies à leur extrémité de prises gigognes 13a, 13b, 13d, permettant ainsi une connexion aisée par l'intermédiaire de la prise 17 sur la ligne téléphonique 2. Cette ligne fait partie d'un réseau de télécommunications 7 auquel sont reliées des unités de traitement d'information R₁, ..., Rₘ, (dans l'application préférée de l'invention, des centres répartiteurs informatisés) et un destinataire D, tel qu'un centre de traitement statistique informatisé.

Le dispositif 1, logé dans un boîtier 1a, de préférérence fermé et scellé, est alimenté à partir du secteur au moyen d'un cordon 100. Son faible encombrement permet de le placer sous le terminal de commande 11 comme montré sur la figure 2.

Dans une réalisation pratique du dispositif conforme à l'invention, l'ensemble des circuits composant ce dispositif est disposé sur une carte en circuit imprimé unique qui est placée dans le boîtier 1a.

Ce boîtier, fermé et scellé pour des raisons évidentes de discrétion et de confidentialité, présente comme liaisons avec l'extérieur :
- une liaison 2d avec la ligne téléphonique 2,
- et un cordon d'alimentation secteur 100.

Il est par ailleurs prévu, en cas d'impossibilité de transfert normal des informations stockées sélectivement dans les mémoires de stockage du dispositif 1 vers le centre de traitement statistique D par le canal normal de la ligne téléphonique 2, une liaison temporaire 2c pour effectuer le transfert de ces informations vers des moyens de saisie de données tels qu'un microordinateur 200, dans le cadre d'une intervention de dépannage du dispositif conforme à l'invention.

Le dispositif de transfert sélectif différé 1 comprend, en référence à la figure 3, des moyens d'écoute permanente 3 reliés à des moyens d'analyse et de sélection 8. Ceux-ci identifient les protocoles de transmission prédéterminés et stockent dans des moyens de stockage 4, les informations "écoutées" correspondant aux protocoles de transmission identifiés.

Des moyens de transmission 6 reliés aux moyens de stockage 4 et à la ligne téléphonique 2, transfèrent à des instants prédéterminés les informations stockées à destination d'un destinataire D, tel qu'un centre de traitement statistique informatisé.

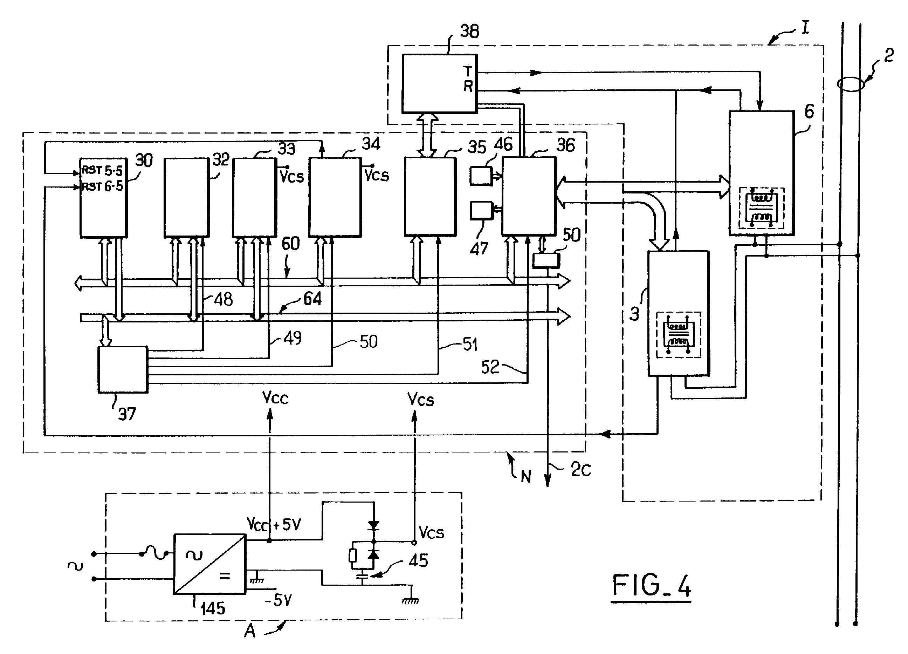

Dans une version préférée de l'invention, illustrée à la figure 4, le dispositif de transfert sélectif différé conforme à l'invention, comprend une partie numérique N et une partie interface de ligne I.

La partie numérique N inclut les moyens d'analyse et de sélection 8 et les moyens de stockage 4 cités précédemment. Elle est organisée autour d'un microprocesseur 30 (INTEL 8085) de 8 bits et comporte une mémoire ROM 32 contenant un microprogramme de gestion du transfert sélectif différé et des mémoires vives RAM 33 destinées à stocker les informations sélectionnées. Ces périphériques sont reliés au microprocesseur 30 suivant les techniques bien connues d'interfaçage. La partie numérique N comporte en outre un circuit intégré d'horloge 34 fournissant l'heure et la date courantes, un circuit d'émission-réception asynchrone 35 de type UART et un circuit de ports d'entrée-sortie 36 de type INTEL 8155 comportant en outre une mémoire vive et un compteur intégrés. Deux entrées d'interruption (RST 5.5 et RST 6.5) du microprocesseur sont utilisées : l'une est reliée à une sortie du circuit horloge 34 et l'autre est relié à un circuit de détection de sonnerie qui sera présenté dans la suite de la description.

Les informations : codes, données et adresses échangées entre le microprocesseur et les périphériques présentés ci-dessus empruntent classiquement des bus de données 60 et d'adresses 64.

Un circuit de décodage d'adresse 37 relié au bus d'adresse fournit à chacun des périphériques un signal de sélection par les lignes 48, 49,50, 51 et 52.

Un redresseur 145 relié au secteur délivre deux sorties de tension continue régulée de + 5 V et - 5 V. Un condensateur 45 de très grande capacité, par exemple 1 Farad, est relié aux bornes de sortie du redresseur 145 et assure la sauvegarde des informations stockées dans les mémoires vives 33 et dans le circuit d'horloge 34, lors d'une interruption d'alimentation secteur ou en présence de microcoupures. Une pile au lithium peut aussi être utilisée. Des diodes électroluminescentes 47 et des interrupteurs 46 peuvent être reliés au circuit de ports d'entrée-sortie 36 pour permettre la mise au point et la maintenance du dispositif de transfert sélectif différé 1.

La partie d'interface de ligne I inclut les moyens d'écoute systématique 3 et les moyens de transmission 6. Elle comporte en outre un circuit modulateur-démodulateur (modem) 38 relié au circuit d'émission-réception asynchrone 35. Ces deux circuits assurent la conversion de signaux analogiques modulés transmis sur la ligne 2 en mots numériques prêts à traiter par le microprocesseur 30, et l'opération inverse depuis la partie numérique N vers la ligne téléphonique 2. Le modem 38 comporte une sortie analogique T de transmission et une entrée analogique R de réception.

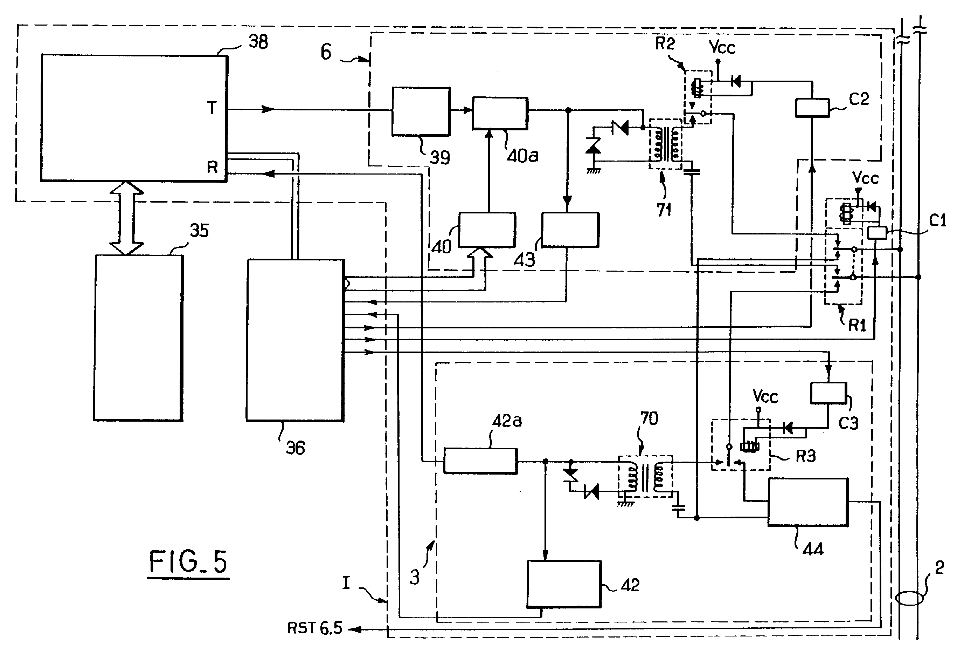

Dans la réalisation pratique de l'invention, les moyens de transmission 6 comprennent, en référence à la figure 5, un circuit de réglage du niveau de sortie 39, un circuit sommateur 40a permettant de transmettre les impulsions de numérotation émises par un circuit de numérotation 40, qui peut être vocal ou numérique. La sortie de ce circuit sommateur est reliée au primaire d'un transformateur d'émission 71 et à un circuit de détection 43 de la première fréquence prédéterminée, dans le cas présent 440 Hz.

Le secondaire du transformateur 71 est relié à la ligne téléphonique 2 à travers les relais électromagnétiques R₂ et R₁.

Les moyens d'écoute systématique 3 comprennent un transformateur de réception 70 dont le primaire est relié à la ligne téléphonique 2 à travers un relais électromagnétique R₃ et le relais R₁. Le secondaire du transformateur de réception 70 est relié à un circuit de détection 42 d'une seconde fréquence prédéterminée, dans le cas présent 2100 Hz, et à l'entrée R du modem 38 par un circuit d'adaptation 42a.

Le circuit d'entrée-sortie 36 assure à la fois la commande du circuit de numérotation 40 et des trois relais R₁ , R₂, R₃, et la réception des signaux de détection émis par les deux circuits 42, 43 de détection de fréquence prédéterminées.

Le relais R₁, alimenté par le circuit de commande ci, contrôle la connexion de la ligne téléphonique 2, soit au transformateur de transmission 71, soit au transformateur de réception 70. Cet aiguillage est commandé par le microprocesseur 30 à travers l'interface d'entrée-sortie 36, en fonction des différentes phases de communication.

Le relais R₂ permet la connexion effective du secondaire du transformateur 71 à la ligne téléphonique 2.

Le relais R₃ contrôle, en situation de réception, la connexion de la ligne téléphonique 2,soit au circuit de détection de sonnerie 44, soit au primaire du transformateur de réception 70.

Ces deux relais R₂, R₃ ont pour interface de puissance avec le circuit d'entrée-sortie 36, respectivement les circuits de commande C₂ et C₃.

Afin de ne pas perturber la ligne téléphonique 2 et être en conformité avec les normes régissant les matériels connectés au réseau de télécommunications 7, le transformateur d'émission 71 présente une impédance de sortie, vue de la ligne, égale à 600 ohms. Pour les mêmes raisons, le transformateur de réception 70 présente une impédance d'entrée, vue de la ligne, supérieure ou égale à 10 kiloohms.

Il serait tout à fait envisageable de prévoir un transformateur unique assurant les deux fonctions d'émission et de réception, et présentant des impédances équivalentes d'entrée et de sortie répondant aux exigences décrites ci-dessus.

On va maintenant décrire de façon détaillée le procédé de transfert sélectif différé conforme à l'invention. Ce procédé est concrétisé pratiquement par un microprogramme stocké dans la mémoire morte 32 du dispositif 1, en référence à la figure 4.

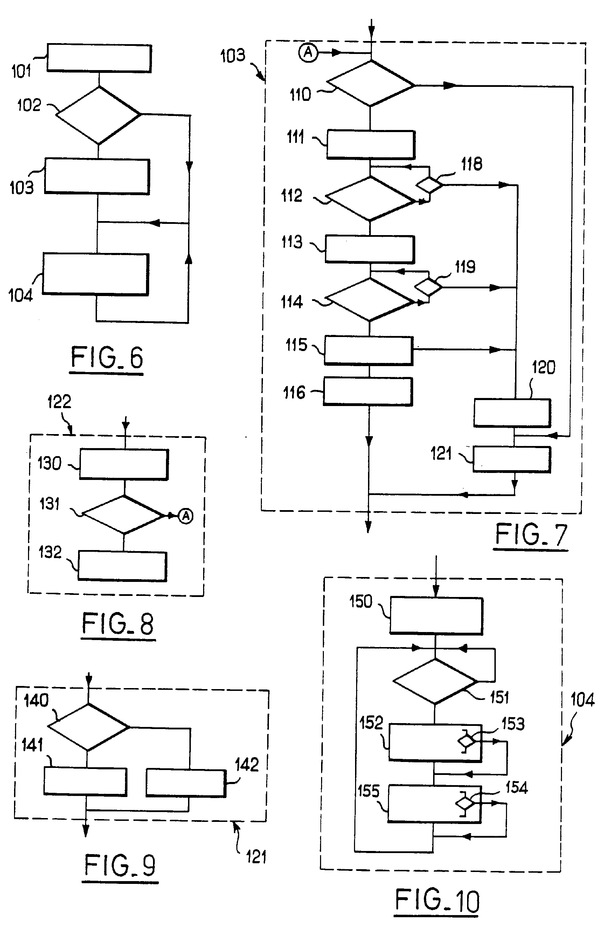

La première étape du procédé (figure 6) est une étage d'initialisation 101 effectuée lorsque le dispositif de transfert sélectif différé 1 est mis sous tension. Cette mise sous tension a pour premier effet de connecter électriquement le dispositif selon l'invention à la ligne téléphonique 2 par le biais des relais électromagnétiques R₁, R₂, R₃.

Un test interne 102 est pratiqué pour savoir s'il s'agit d'une première mise sous tension ou d'une mise sous tension à l'issue d'une interruption momentanée de secteur.

Le dispositif selon l'invention possédant en effet un condensateur de sauvegarde, les informations stockées en mémoire vive 33 et dans l'horloge 34 sont conservées lors d'une interruption pouvant atteindre plusieurs heures.

S'il s'agit effectivement d'une première mise sous-tension, à l'occasion de l'installation de ce dispositif dans une officine par exemple, une étape 103 d'appel du centre destinataire D est effectuée pour transmettre à ce dernier des informations d'installation de ce nouveau dispositif (localisation, identification). A l'issue de cette étape, dont le déroulement va être décrit ultérieurement, le dispositif se place alors en position d'écoute systématique et de stockage sélectif, dans le cadre d'une étape 104 de stockage d'informations. Cette étape est en bouclage permanent et n'est interrompue qu'à des instants prédéterminés auxquels le dispositif entreprend le transfert des informations stockées vers le centre destinataire D, dans le cadre d'une phase de transfert ayant la même structure que l'étape d'appel 103 citée précédemment. Ces instants prédéterminés sont obtenus par l'horloge 34 qui émet un signal d'interruption sur l'entrée RST 5.5 du microprocesseur 30, en référence à la figure 4. Cette étape d'appel 103, dont l'organigramme simplifié est présenté en figure 7, comporte tout d'abord un test de liberté de ligne 110. En effet, il faut rappeler qu'en pratique le dispositif conforme à l'invention est branché sur une ligne téléphonique, par exemple la ligne d'une officine pharmaceutique, qui peut être utilisée pour tous autres usages. Si la ligne 2 est libre, l'unité d'émission-réception asynchrone 36 et le modem 38 sont configurés pour permettre une transmission à 1200 bauds et la ligne 2 est effectivement prise.

Dans le cadre du test 112, le circuit détecteur 42 de la première fréquence prédéterminée, ici 440 Hz, transmet au microprocesseur 30, par le biais du circuit d'entrée-sortie 36, un signal de détection de cette fréquence.

Si au bout d'un temps prédéterminé, le circuit détecteur 42 n'a pas détecté la fréquence de 440 Hz, la boucle d'attente est interrompue (test 118). En cas de détection, le circuit de numérotation 40, est mis en oeuvre et génère sur la ligne 2 le numéro du centre de traitement destinataire D (étape 113). A l'issue de cette numérotation, le dispositif 1 se met en attente d'une seconde fréquence prédéterminée, ici 2100 Hz, avec émission d'une fréquence de 1 300 HZ hachée indicatrice de la prise en compte effective du numéro demandé et du début de la communication entre le dispositif 1 et le centre destinataire D. Un test 119 de durée d'attente est aussi prévu pour interrompre l'attente de la fréquence de 2100 Hz au-delà d'une durée prédéterminée afin de ne pas bloquer inutilement la ligne téléphonique 2. En cas de détection, la communication est alors établie et le dispositif de transfert sélectif différé 1 transmet en mode "half-duplex" à 1200 bauds, par l'intermédiaire de ses moyens de transmission 6, les informations stockées, suivant des techniques de transmission asynchrone bien connues. Durant cette étape de communication 115, le centre de traitement destinataire D transmet au dispositif 1 la date, l'heure et la minute du prochain appel que devra effectuer le dispositif. Ces informations concernant l'instant du prochain appel sont stockées en mémoire vive 33 du dispositif selon l'invention. Les appels sont programmés de préférence la nuit afin d'interférer le moins possible avec l'utilisation normale de la ligne téléphonique 2.

A l'issue de l'étape de communication 115, la ligne téléphonique 2 est libérée par le dispositif 1 (étape 116), mais les moyens d'écoute systématique 3 sont bien entendu maintenus.

Lorsque l'un des tests de liberté de ligne 110, de durée d'attente 118 et 119 aboutit à une interruption de la procédure d'appel du centre destinataire D ou bien lorsque la communication 115 en cours est interrompue, une étape de rappel 121 est exécutée soit directement après le test de liberté de ligne 110, soit à l'issue d'une étape de libération de ligne 120 après les tests de durée d'attente 118 et 119.

Lors de cette étape de rappel 121 (figure 9), un premier test 140 est effectué au sein de la partie numérique N du dispositif pour déterminer s'il s'agit du premier rappel. Si tel est le cas, le transfert des informations stockées est reporté (étape 141) à un instant prédéterminé de rappel déterminé par la partie numérique.

Dans le cas contraire, la future heure d'appel est prise égale à l'heure d'appel programmée précédente, ce nouveau rappel étant de toute façon effectué la nuit suivante (étape 142).

S'il s'agit d'une première mise sous tension et si le test de ligne disponible 110 échoue ou si la communication de premier appel est interrompue, une étape de rappel spécifique 122 est effectuée (figure 8). Un nombre prédéterminé de tentatives de rappel lors d'une première mise sous tension a été défini préalablement et entré comme paramètre interne du microprogramme, ainsi qu'une durée de temporisation prédéterminée entre chaque tentative.

Une première étape de temporisation 130 a donc lieu lors de chaque phase de rappel 122 en référence à la figure 8 si le nombre de tentatives n'a pas dépassé le nombre prédéterminé de tentatives de rappel (test 131). Si ce nombre a été atteint, la procédure de rappel est interrompue et le dispositif est considéré comme étant hors service. Dans le cas contraire, une phase d'appel semblable à celle décrite à la figure 7 (point d'entrée référencé A), est commencée.

L'étape de stockage d'informations 104, dont l'organigramme simplifié est donné en figure 10, comporte une première étape 150 de fixation d'une première vitesse de transmission prédéterminée qui concerne le circuit d'émission-réception asynchrone 35 de type UART.

Dans la réalisation pratique décrite ci-dessus, cette vitesse de transmission est typiquement de 300 bauds. Elle est en fait imposée par les protocoles de transmission prédéterminés entre le dispositif émetteur spécialisé E, en référence à la figure 3, et le ou les unités de traitement de l'information R₁ , ..., Rₙ , à savoir dans l'application pratique concernée, les centres répartiteurs de spécialités pharmaceutiques.

A l'issue de cette étape de fixation de la vitesse de transmission, une étape de reconnaissance de protocoles 151 est engagée.

Des codes représentatifs des protocoles recherchés ont été au préalable entrés en mémoire morte 32 du dispositif 1 mettant en oeuvre le procédé, en référence à la figure 4, et les informations saisies par les moyens d'écoute systématique 3, traitées et converties par le modem 38 et le circuit d'émission-réception asynchrone 35 sont systématiquement comparées numériquement aux codes représentatifs des protocoles recherchés.

Lorsqu'un protocole est reconnu, une étape de stockage d'informations est entreprise. Il s'agit d'écrire en mémoire vive 32 du dispositif 1, l'ensemble des informations transmises sur la ligne et échangées entre, par exemple, le dispositif émetteur E de l'officine pharmaceutique et une unité de traitement d'informations R₁, ... Rₙ, par exemple une centrale de répartition.

Cette étape de stockage est divisée en pratique en deux sous-étapes, la première 152 concernant les informations émises par le dispositif émetteur E à destination de l'unité de traitement d'informations R₁, ... Rₙ, et la seconde 155 concernant la réponse de cette unité de traitement d'informations R₁, ..., Rₙ au dispositif émetteur E.

Dans la réalisation pratique de l'invention présentée ici, la première sous-étape 152 concerne l'envoi de commandes de spécialités pharmaceutiques par l'officine à destination de la centrale de répartition par les moyens décrits auparavant, à savoir l'ensemble E constitué par un terminal de commande 11, 14 et 15 et un combiné téléphonique 12, tandis que la seconde sous-étape 155 représente la réponse de la centrale de répartition à l'officine : accusé de réception de commande, indication des spécalités manquantes, information statistiques éventuelles.

L'échange d'informations entre le dispositif émetteur E et l'unité de traitement d'informations R₁, ..., Rₙ s'effectue en "full-duplex"

Au cours de chacune des deux sous-étapes de stockage 152, 155, un test de durée d'attente de caractères 153, 154 est effectué afin d'interrompre les deux sous-étapes 152, 155 après une durée d'attente de caractères prédéterminée et de recommencer une nouvelle étape de reconnaissance de protocoles 151.

L'étape de stockage d'informations 104 est donc répétée continûment et est interrompue soit par un ordre d'appel émis par l'horloge 34 pour entreprendre une étape d'appel 103, soit par un incident de communication (dérangement, rupture de ligne), soit par un appel émis par le centre destinataire D et détecté par les moyens de sonnerie 44.

Lors de chaque étape de stockage d'informations, le dispositif conforme à l'invention associe à chaque ensemble d'informations stockées sélectivement correspondant à un protocole reconnu, l'information de l'instant d'exécution de ce stockage, par exemple le jour, la date et l'heure, fourni par l'horloge 34. Cette information de temps est stockée en même temps que les informations sélectionnées correspondantes.

Lors du transfert différé de ces informations et pendant l'étape de communication 115 en référence à la figure 7, un code d'identification du dispositif 1 ainsi que l'information de l'instant de stockage sont transférées conjointement avec les informations stockées sélectivement vers le centre de traitement statistique D.

On va maintenant décrire la mise en oeuvre du procédé de transmission d'informations codées conforme à l'invention dans une étude de marché de spécialités pharmaceutiques.

Un laboratoire pharmaceutique souhaite connaître de façon précise l'évolution des ventes d'une ou plusieurs spécialités pharmaceutiques, dans le temps et dans l'espace. Il s'adresse à une entreprise d'études statistiques et de marché équipée d'un centre de traitement d'information D relié au réseau téléphonique 7. Cette entreprise installe dans un nombre approprié d'officines pharmaceutiques, le dispositif de transfert sélectif différé conforme à l'invention. Ces officines doivent bien entendu être équipées de terminaux de commande à distance 11, 14, 15 en référence aux figures 1a et 1b. L'objectif, décrit précédemment, est de recueillir l'ensemble des commandes adressées par chaque officine aux différentes centrales de répartition R₁, ..., R_{M} présentes sur le territoire concerné par l'étude de marché.

L'installation du dispositif selon l'invention dans l'officine est très simple et rapide puisqu'aucun réglage n'est nécessaire. Le microprogramme de gestion du transfert sélectif différé a été écrit préalablement en mémoire morte 32, éventuellement du type REPROM, lors de la mise au point du dispositif. Il suffit uniquement de brancher le dispositif à la ligne téléphonique 2 de l'officine au moyen de la prise gigogne 13d reliée au cordon 2d, et de brancher le cordon d'alimentation sur une prise secteur. La mise sous tension provoque automatiquement l'exécution du microprogramme par le microprocesseur 30 et la première étape du procédé, à savoir l'étape d'initialisation 101, est entreprise. Le dispositif appelle le centre de traitement statistique D pour lui signifier en quelque sorte son installation et se met ensuite en situation d'écoute systématique. Les différentes étapes d'identification, de stockage et de transfert sont ensuite effectuées de la façon décrite précédemment.

Le centre de traitement statistique D reçoit ainsi, de chaque dispositif de transfert sélectif différé installé dans une officine, l'ensemble des commandes accompagnées des informations spécifiques d'identification de chaque dispositif et de l'instant de passage des commandes.

En cas de problème de fonctionnement, tel que l'impossibilité de transférer les informations stockées, le dispositif est alors récupéré par l'entreprise installatrice et le contenu de sa mémoire vive 33, sauvegardé grâce au condensateur 45 ou éventuellement une pile au lithium, peut être transféré vers un microordinateur 200, par une liaison temporaire 26, en référence à la figure 2. Un circuit spécialisé 50 (figure 4) relié au circuit d'émission-réception asynchrone 36 assure la transmission série des informations stockées sur la liaison temporaire 2c.

Le procédé de transmissions d'informations codées ainsi mis en oeuvre présente donc une grande souplesse d'emploi et de gestion et répond aux besoins de collecte rapide et fiable d'informations dispersées géographiquement, pour leur traitement centralisé.

Bien entendu, l'invention n'est pas limitée aux exemples décrits et représentés et de nombreux aménagements peuvent être apportés à ces exemples sans sortir du cadre de l'invention.

Ainsi, le procédé selon l'invention peut être mis en oeuvre pour l'analyse d'informations et la réalisation de statistiques concernant d'autres secteurs économiques, tels que le commerce de détail ou toute autre activité utilisant des techniques de commande par ligne téléphonique publique ou spécialisée.

## Revendications

1. Procédé de stockage et de transmission d'informations codées sur une ligne téléphonique (2) appartenant à un réseau de télécommunications (7), caractérisé en ce qu'il comprend :
- une opération d'écoute systématique des informations transmises sur ladite ligne téléphonique,
- une opération d'identification (151) de protocoles de transmission prédéterminés, l'identification de l'un desdits protocoles conduisant à
- une opération de stockage sélectif (153, 154) d'informations transmises dans le cadre dudit protocole identifié, et
- une opération de transfert (103) via ladite ligne téléphonique (2), à des instants prédéterminés programmés desdites informations stockées sélectivement vers un destinataire (D) relié audit réseau de télécommunications (7).

2. Procédé de transfert sélectif différé conforme à la revendication 1, caractérisé en ce que lesdits protocoles de transmission prédéterminés correspondent à des échanges d'informations entre un dispositif émetteur spécialisé (E) relié à ladite ligne téléphonique(2) et une ou plusieurs unités de traitement d'informations (R₁, ... Rₘ) reliées audit réseau (7).

3. Procédé conforme à la revendication 2, caractérisé en ce que lors de chacune desdites opérations de transfert (103), un code d'identification dudit dispositif émetteur spécialisé (E) est transféré conjointement avec lesdites informations stockées sélectivement vers ledit destinataire prédéterminé (D).

4. Procédé conforme à l'une des revendications 2 ou 3, caractérisé en ce que lors de chacune desdites opérations de transfert (103), des informations concernant l'instant de stockage sont transférées conjointement avec lesdites informations stockées sélectivement vers ledit destinataire prédéterminé (D).

5. Procédé conforme à l'une des revendications 2 à 4, caractérisé en ce que lors de chacune desdites opérations de transfert (103), ledit destinataire (D) communique audit dispositif émetteur (E) l'indication de l'instant prédéterminé de début de la prochaine opération de transfert.

6. Procédé conforme à l'une des revendications 2 à 5, caractérisé en ce qu'il comprend en outre, une phase d'initialisation durant laquelle ledit dispositif émetteur (E) transmet audit destinataire prédéterminé (D) des informations d'initialisation indicatives de la mise en oeuvre dudit procédé et des conditions matérielles de cette mise en oeuvre et en ce que ladite phase d'initialisation peut être réitérée un nombre prédéterminé de fois espacées d'une durée de temporisation prédéterminée, en cas d'impossibilité de communication.

7. Procédé conforme à l'une des revendications 2 à 6, caractérisé en ce que dans le cas où une opération de transfert ne peut être complètement réalisée audit instant programmé, ladite opération de transfert est réitérée à un instant de rappel compris dans une plage horaire prédéterminée.

8. Procédé conforme à la revendication 7, caractérisé en ce que dans le cas où ladite opération de transfert ne peut une nouvelle fois être complètement réalisée audit instant de rappel, ladite opération de transfert est reportée d'une journée par rapport audit instant programmé.

9. Procédé conforme à l'une des revendications 1 à 8, caractérisé en ce que ladite opération de transfert (103) comporte :
- un test de liberté d'utilisation (110) de la ligne téléphonique (2), suivi, si la ligne est libre, d'une prise de ligne (111) et,
- d'un test bouclé de reconnaissance (112) d'une première fréquence prédéterminée, suivi, lorsque ladite première fréquence prédéterminée a été détectée,
- d'une opération de numérotation (113) consistant en la transmission sur ladite ligne téléphonique (2) d'un train d'impulsions ou de fréquences prédéterminé indicatif dudit destinataire (D),
- d'un test bouclé de reconnaissance (114) d'une seconde fréquence prédéterminée, suivi, lorsque ladite seconde fréquence prédéterminée a été détectée,
- d'une opération de communication (115) entre ledit dispositif émetteur (E) et ledit destinataire (D), au cours de laquelle lesdites informations stockées sélectivement sont effectivement transmises audit destinataire (D) sous un protocole prédéterminée,
- et d'une opération de fin de communication (116).

10. Procédé conforme à la revendication 9, caractérisé en ce que lesdits tests bouclés de reconnaissance (112, 114) d'une première et d'une seconde fréquence prédéterminées présentent une limite de durée prédéterminée au-delà de laquelle ladite opération de transfert est interrompue et est réitérée à un instant de rappel prédéterminé.

11. Procédé conforme à l'une des revendications 2 à 10, caractérisé en ce que l'issue de l'identification d'un protocole de transmission prédéterminé indicatif d'une transmission d'informations dudit dispositif émetteur spécialisé (E) vers une unité (R) prédéterminée parmi lesdites unités de traitement d'informations (R₁, ... Rₘ), lesdites informations transmises dans le cadre dudit protocole de transmission sont stockées au cours d'une première étape de stockage (152) et en ce qu'à l'issue de ladite première étape de stockage (152), des informations de réponse transmises par ladite unité de traitement d'informations (R) vers ledit dispositif émetteur spécialisé (E) sont aussi stockées au cours d'une seconde étape de stockage (155), l'ensemble desdites informations stockées lors de la communication entre le dispositif émetteur spécialisé (E) et ladite unité de traitement d'informations (R₁, ... R_{M}), constituant lesdites informations stockées sélectivement.

12. Procédé conforme à l'une des revendications 2 à 11, caractérisé en ce que lesdites informations échangées entre ledit dispositif émetteur spécialisé (E) et chacune desdites unités de traitement d'informations (R₁ ... Rₘ) sont transmises en mode asynchrone à une première vitesse de transmission prédéterminée et constituées de caractères.

13. Procédé conforme aux revendications 11 et 12, caractérisé en ce qu'au cours desdites première et seconde étapes de stockage (152, 155), chacun desdits caractères constituant lesdites informations échangées est attendu pendant une durée d'attente prédéterminée au-delà de laquelle lesdites première ou seconde étapes de stockage (152, 155) sont interrompues et une nouvelle opération d'identification de protocoles (151) est commencée.

14. Procédé conforme à l'une des revendications 12 à 13, caractérisé en ce que lesdites opérations de transfert (103) desdites informations stockées sélectivement vers ledit destinataire (D) sont effectuées en mode de transmission asynchrone à une seconde vitesse de transmission prédéterminée.

15. Système de transmission d'informations codées sur une ligne téléphonique (2) appartenant à un réseau de télécommunications (7) comprenant un dispositif émetteur spécialisé (E) relié à ladite ligne téléphonique (2), ce dispositif comportant des moyens d'entrée d'informations codées, des moyens de traitement desdites informations codées et des moyens pour transmettre lesdites informations codées sur ladite ligne téléphonique (2) vers des unités de traitement d'information (R₁ , ... Rₘ) reliées audit réseau de télécommunications (7), caractérisé en ce qu'il comprend en outre, un dispositif de transfert sélectif différé (1), relié à ladite ligne téléphonique (2), comprenant
- des moyens d'écoute systématique (3) reliés à ladite ligne téléphonique (2),
- des moyens d'analyse et de sélection (8) reliés auxdits moyens d'écoute (3) pour sélectionner parmi les informations transmises sur ladite ligne téléphonique (2) et écoutées par lesdits moyens d'écoute (3), les informations codées correspondant à un protocole de transmission prédéterminé,
- des moyens de stockage (4) reliés auxdits moyens d'analyse et de sélection (8) pour stocker lesdites informations sélectionnées, et
- des moyens de transmission (6) reliés auxdits moyens de stockage (4) et à ladite ligne téléphonique (2) pour transmettre, auxdits instants prédéterminés, lesdites informations codées, préalablement sélectionnées et stockées, vers ledit destinataire (D).

16. Système conforme à la revendication 15, caractérisé en ce que lesdites informations codées sont transmises en mode asynchrone sous forme de signaux analogiques modulés sur ladite ligne téléphonique (2).

17. Système conforme à la revendication 16, caractérisé en ce que les informations saisies par lesdits moyens d'écoute systématique (3) sont converties en signaux asynchrones numériques par des moyens de modulation-démodulation (38) reliés auxdits moyens d'écoute et en ce que lesdits signaux asynchrones numériques sont convertis en signaux numériques sous forme de mots comportant un nombre prédéterminé de bits, par des moyens d'émission-réception asynchrone (35) reliés, d'une part, auxdits moyens de modulation-démodulation (38) et, d'autre part, auxdits moyens de stockage (4).

18. Système conforme à la revendication 17, caractérisé en ce que lesdits moyens d'émission-réception asynchrone (35) et lesdits moyens de modulation-démodulation (38) sont aussi reliés auxdits moyens de transmission (6) pour convertir et moduler lesdites informations stockées sélectivement lors de leur transfert vers ledit destinataire prédéterminé (D).

19. Système conforme à la revendication 18, caractérisé en ce que ledit dispositif de transfert sélectif différé (1) comprend en outre des moyens de contrôle et de traitement (30), tels qu'un microprocesseur, reliés par un bus (60) à des moyens de mémoire permanente (32) pour stocker un microprogramme, auxdits moyens de stockage (4) et auxdits moyens d'émission-réception asynchrone (35) et incluant lesdits moyens d'analyse et de sélection (8), pour, d'une part, gérer lesdits moyens d'écoute (3), de transmission (6),de modulation-démodulation (38), d'émission-réception asynchrone (38), de mémoire permanente (32) et de stockage (4), et, d'autre part analyser lesdites informations transmises sous forme de mots par lesdits moyens d'émission-réception asynchrone (38), identifier des protocoles de transmission prédéterminés et contrôler les opérations de stockage par lesdits moyens de stockage (4) et les opérations de transfert auxdits instants prédéterminés, desdites informations stockées sélectivement vers ledit destinataire (D).

20. Système conforme à la revendication 19, caractérisé en ce que ledit dispositif de transfert sélectif différé (1) comprend en outre des moyens d'horloge (34) reliés auxdits moyens de contrôle et de traitement (30) par ledit bus (60), pour fournir notamment à tout instant la date, l'heure et la minute.

21. Système conforme à l'une des revendications 17 à 20, caractérisé en ce que lesdits moyens de transmission (6) comprennent des moyens de détection (43) d'une première fréquence prédéterminée, des moyens de numérotation (40) pour émettre sur ladite ligne téléphonique un numéro indicatif dudit destinataire (D), et en ce que lesdits moyens d'écoute systématique (3) comprennent des moyens de détection (42) d'une seconde fréquence prédéterminée pour reconnaître une confirmation de prise en compte dudit numéro indicatif, et des moyens de détection de sonnerie (44) pour détecter sur ladite ligne téléphonique un signal indicatif d'un appel extérieur.

22. Système conforme à la revendication 21, caractérisé en ce que ledit dispositif de transfert sélectif différé (1) comprend en outre un transformateur d'émission (71) reliant ladite ligne téléphonique (2) auxdits moyens de numérotation (40) et auxdits moyens de modulation-démodulation (38), ledit transformateur d'émission (71) présentant une impédance de sortie vue de ladite ligne téléphonique (2) égale à 600 ohms.

23. Système conforme à la revendication 22, caractérisé en ce que ledit dispositif de transfert sélectif différé (1) comprend en outre un transformateur de réception (70) reliant ladite ligne téléphonique (2) auxdits moyens de détection (43) d'une première fréquence prédéterminée, auxdits moyens de détection (42) d'une seconde fréquence prédéterminée et auxdits moyens de modulation-démodulation (38), ledit transformateur de réception (70) présentant une impédance d'entrée, vue de ladite ligne téléphonique (2), supérieure ou égale à 10 kiloohms.

24. Système conforme a la revendication 23, caractérisé en ce que ledit transformateur d'émission (71) et ledit transformateur de réception (70) constituent en fait un seul transformateur assurant à la fois l'émission et la réception.

25. Système conforme aux revendications 20 et 21, caractérisé en ce que ledit dispositif de transfert sélectif différé (1) comprend en outre des moyens d'entrée-sortie (36) reliés d'une part auxdits moyens de contrôle et de traitement (30) par ledit bus (60) et d'autre part, auxdits moyens de détection (43) d'une première fréquence prédéterminée, auxdits moyens de détection (42) d'une seconde fréquence prédéterminée, auxdits moyens de numérotation (40) et auxdits moyens de modulation-démodulation (38), lesdits moyens d'entrée-sortie (38) fournissant auxdits moyens de numérotation des trains d'impulsions prédéterminés correspondant au numéro dudit destinataire (D), et lesdits moyens de détection (42, 43) délivrant auxdits moyens d'entrée-sortie (36) des signaux indicatifs de la détection respective de ladite première et de ladite seconde fréquences prédéterminées.

26. Système conforme à l'une des revendications 23 ou 24, caractérisé en ce que des moyens d'amplification réglable (39) sont interposés entre lesdits moyens de modulation-démodulation (38) et ledit transformateur d'émission (71) pour maintenir sur ladite ligne téléphonique (2) un niveau de signal sensiblement constant.

27. Système conforme à l'une des revendications 25 ou 26, caractérisé en ce que lesdits moyens de contrôle et de traitement (30), lesdits moyens de stockage (4), lesdits moyens de mémoire permanente (32), lesdits moyens d'horloge (34), lesdits moyens d'émission-réception asynchrone (35) et lesdits moyens d'entre-sortie (36) sont des circuits intégrés numériques.

28. Système conforme à la revendication 27, caractérisé en ce que lesdits moyens de modulation-démodulation (38), lesdits moyens de numérotation (40), lesdits moyens de détection (43) d'une première fréquence prédéterminée, lesdits moyens de détection (42) d'une seconde fréquence prédéterminée et lesdits moyens de détection de sonnerie (44) sont des circuits intégrés spécifiques.

29. Système conforme à la revendication 28, caractérisé en ce que ledit dispositif de transfert sélectif différé (1) comprend en outre des moyens de conversion alternatif-continu (145) délivrant une tension d'alimentation continue régulée auxdits circuits intégrés, et des moyens d'alimentation de sauvegarde (45), par exemple un condensateur à très haute densité d'énergie de stockage, reliés auxdits moyens de conversion (145), pour sauvegarder les informations stockées dans lesdits moyens de stockage (4) et les informations générées par lesdits moyens d'horloge (34), en cas d'interruption de l'alimentation secteur.

30. Système conforme à l'une des revendications 15 à 29, caractérisé en ce que ledit dispositif de transfert sélectif différé (1) est inclus dans un boîtier 1a fermé et scellé et possède comme liaisons avec l'extérieur :
- une liaison (2d) avec ladite ligne téléphonique (2),
- une entrée d'alimentation secteur (100).

31. Système conforme à la revendication 30, caractérisé en ce que ledit dispositif de transfert sélectif différé (1) comporte en outre, comme autre liaison avec l'extérieur une liaison numérique temporaire (2c) pour pouvoir transférer vers des moyens de saisie de données (200),extérieurs audit dispositif, lesdites informations stockées sélectivement dans lesdits moyens de stockage (4), lorsque le transfert par lesdits moyens de transmission (6) via ladite ligne téléphonique (2) s'avère impossible.

32. Système conforme à l'une des revendications 15 à 31, caractérisé en ce que ledit dispositif émetteur spécialisé (E) comporte un terminal de commande (11, 14) et un poste de téléphone (12) reliés ladite ligne téléphonique (2).

33. Système conforme à l'une des revendications 15 à 32 , caractérisé en ce que ledit destinataire (D) est un centre de traitement informatique.

## Patentansprüche

1. Verfahren zum Speichern und Übertragen von kodierten Informationen auf einer einem Fernmeldenetz (7) zugehörigen Telefonleitung (2), dadurch gekennzeichnet, dass es umfasst:
- eine Operation des systematischen Abhörens von auf der Telefonleitung übertragenen Informationen,
- eine Operation der Identifikation (151) von vorgegebenen Übertragungsprotokollen, wobei die Identifikation eines der Protokolle zu
- einer Operation des selektiven Speicherns (153, 154) von im Rahmen des identifizierten Protokolls übertragenen Informationen führt, und
- eine Operation des Übertragens (103) der selektiv gespeicherten Informationen über die Telefonleitung (2) zu vorgegebenen, programmierten Zeitpunkten an einen mit dem Fernmeldenetz (7) verbundenen Empfänger (D).

2. Verfahren zur zurückgestellten selektiven Übertragung gemäß Anspruch 1, dadurch gekennzeichnet, daß die vorgegebenen Übertragungsprotokolle jeweils einem Informationsaustausch zwischen einer mit der Telefonleitung (2) verbundenen besonderen Sendevorrichtung (E) und einer oder mehreren mit dem Netz (7) verbundenen Informationsverarbeitungseinheiten (R₁, ..., Rₘ) entsprechen.

3. Verfahren gemäß Anspruch 2, dadurch gekennzeichnet daß bei jeder der Übertragungsoperationen (103) gemeinsam mit den selektiv gespeicherten Informationen ein Identifikationskode der besonderen Sendevorrichtung (E) an den vorgegebenen Empfänger (D) übertragen wird.

4. Verfahren gemäß einem der Ansprüche 2 oder 3, dadurch gekennzeichnet, daß bei jeder der Übertragungsoperationen (103) gemeinsam mit den selektiv gespeicherten Informationen Informationen bezüglich des Speicherungszeitpunkts an den vorgegebenen Empfänger (D) übertragen werden.

5. Verfahren gemäß einem der Ansprüche 2 bis 4, dadurch gekennzeichnet, daß bei jeder der Übertragungsoperationen (103) der Empfänger (D) an die Sendevorrichtung (E) die Mitteilung über den vorgegebenen Zeitpunkt des Beginns der nächsten Übertragungsoperation überträgt.

6. Verfahren gemäß einem der Ansprüche 2 bis 5, dadurch gekennzeichnet, daß es außerdem eine Initialisierungsphase umfaßt, während der die Sendevorrichtung (E) an den vorgegebenen Empfänger (D) Initialisierungsinformationen überträgt, die die Ausführung des Verfahrens und die Gerätebedingungen dieser Ausführung angeben, und daß die Initialisierungsphase jeweils im Abstand einer vorgegebenen Verzögerungsdauer in einer vorgegebenen Anzahl wiederholt werden kann, falls die Herstellung der Verbindung nicht möglich ist.

7. Verfahren gemäß einem der Ansprüche 2 bis 6, dadurch gekennzeichnet, daß in dem Fall, in dem eine Übertragungsoperation im programmierten Zeitpunkt nicht vollständig ausgeführt werden kann, die Übertragungsoperation in einem Wiederholungszeitpunkt, der in einem vorgegebenen Zeitbereich enthalten ist, wiederholt wird.

8. Verfahren gemäß Anspruch 7, dadurch gekennzeichnet, daß in dem Fall, in dem die Übertragungsoperation im Wiederholungszeitpunkt nicht erneut vollständig ausgeführt werden kann, die Übertragungsoperation bezüglich des programmierten Zeitpunktes um einen Tag verschoben wird.

9. Verfahren gemäß einem der Ansprüche 1 bis 8, dadurch gekennzeichnet, daß die Übertragungsoperation (103) umfaßt:
- eine Prüfung, ob die Telefonleitung (2) für eine Verwendung frei ist (110), wobei der Prüfung, falls die Leitung frei ist, ein Besetzen der Leitung (111) und
- eine rückgeschleifte Erkennungsprüfung (112) einer vorgegebenen ersten Frequenz folgen, wobei dieser rückgeschleiften Erkennungsprüfung (112), wenn die vorgegebene erste Frequenz erfaßt worden ist,
- eine Wähloperation (113), die die Übertragung eines den Empfänger (D) angebenden vorgegebenen Impuls- oder Frequenzzuges auf der Telefonleitung (2) umfaßt,
- eine rückgeschleifte Erkennungsprüfung (114) einer vorgegebenen zweiten Frequenz folgen, wobei dieser rückgeschleiften Erkennungsprüfung (114), wenn die vorgegebene zweite Frequenz erfaßt worden ist,
- eine Mitteilungsoperation (115) zwischen der Sendevorrichtung (E) und dem Empfänger (D), in deren Verlauf die wahlweise gespeicherten Informationen unter einem vorgegebenen Protokoll tatsächlich an den Empfänger (D) übertragen werden,
- und eine Operation zur Beendigung der Mitteilung (116) folgen.

10. Verfahren gemäß Anspruch 9, dadurch gekennzeichnet, daß die rückgeschleiften Erkennungsprüfungen (112, 114) einer ersten und einer zweiten vorgegebenen Frequenz eine vorgegebene Zeitbegrenzung aufweisen, jenseits derer die Übertragungsoperation unterbrochen wird und zu einem vorgegebenen Wiederholungszeitpunkt wiederholt wird.

11. Verfahren gemäß einem der Ansprüche 2 bis 10, dadurch gekennzeichnet, daß am Ende der Identifikation eines vorgegebenen Übertragungsprotokolls, das eine Übertragung von Informationen der besonderen Sendevorrichtung (E) an eine vorgegebene Einheit (R) der Informationsverarbeitungseinheiten (R₁, ..., Rₘ) angibt, die im Rahmen des Übertragungsprotokolls übertragenen Informationen im Verlauf eines ersten Speicherungsschrittes (152) gespeichert werden und daß am Ende des ersten Speicherungsschrittes (152) die von der Informationsverarbeitungseinheit (R) an die besondere Sendevorrichtung (E) übertragenen Antwortinformationen im Verlauf eines zweiten Speicherungsschrittes (155) ebenfalls gespeichert werden, wobei die Gesamtheit der während der Kommunikation zwischen der besonderen Sendevorrichtung (E) und der Informationsverarbeitungseinheiten (R₁, ..., R_{M}) gespeicherten Informationen die selektiv gespeicherten Informationen darstellen.

12. Verfahren gemäß einem der Ansprüche 2 bis 11, dadurch gekennzeichnet, daß die Informationen, die zwischen der besonderen Sendevorrichtung (E) und jeder der Informationsverarbeitungseinheiten (R₁, ..., Rₘ) ausgetauscht werden, in einem asynchronen Modus mit einer vorgegebenen ersten Übertragungsgeschwindigkeit übertragen und aus Zeichen gebildet werden.

13. Verfahren gemäß den Ansprüchen 11 und 12, dadurch gekennzeichnet, daß im Verlauf des ersten und des zweiten Speicherungsschrittes (152, 155) jedes der die ausgetauschten Informationen bildenden Zeichen während eines vorgegebenen Warteintervalls erwartet wird, jenseits dessen der erste oder der zweite Speicherungsschritt (152, 155) unterbrochen wird und mit einer neuen Protokoll-Identifikationsoperation (151) begonnen wird.

14. Verfahren gemäß einem der Ansprüche 12 bis 13, dadurch gekennzeichnet, daß die Übertragungsoperationen (103) der selektiv gespeicherten Informationen an den Empfänger (D) im Modus einer asynchronen Übertragung mit einer vorgegebenen zweiten Übertragungsgeschwindigkeit ausgeführt werden.

15. System zum Übertragen von kodierten Informationen auf einer einem Fernmeldenetz (7) zugehörigen Telefonleitung (2), mit einer mit der Telefonleitung (2) verbundenen besonderen Sendevorrichtung (E), die Eingangsmittel für kodierte Informationen, Verarbeitungsmittel der kodierten Informationen und Mittel zum Übertragen der kodierten Informationen auf der Telefonleitung (2) an mit dem Fernmeldenetz (7) verbundene Informationsverarbeitungseinheiten (R₁, ..., Rₘ) aufweist, dadurch gekennzeichnet, daß es außerdem eine mit der Telefonleitung (2) verbundene Vorrichtung zur zurückgestellten selektiven Übertragung (1) umfasst, welche Vorrichtung umfasst :
- Mittel zum systematischen Abhören, die mit der Telefonleitung (2) verbunden sind,
- Analyse- und Auswahlmittel (8), die mit den Abhörmitteln (3) verbunden sind, um unter den auf der Telefonleitung (2) übertragenen und von den Abhörmitteln (3) abgehörten Informationen diejenigen kodierten Informationen auszuwählen, die einem vorgegebenen Übertragungsprotokoll entsprechen,
- Speichermittel (4), die mit den Analyse- und Auswahlmitteln (8) verbunden sind, um die ausgewählten Informationen zu speichern,
- Übertragungsmittel (6), die mit den Speichermitteln (4) und der Telefonleitung (2) verbunden sind, um zu den vorgegebenen Zeitpunkten die vorher ausgewählten und gespeicherten kodierten Informationen an den Empfänger (D) zu übertragen.

16. System gemäß Anspruch 15, dadurch gekennzeichnet, daß die kodierten Informationen in einem asynchronen Modus in Form von modulierten Analogsignalen auf der Telefonleitung (2) übertragen werden.

17. System gemäß Anspruch 16, dadurch gekennzeichnet, daß die von den Mitteln zum systematischen Abhören (3) erfaßten Informationen von mit den Abhörmitteln verbundenen Modulations-/Demodulationsmitteln (38) in asynchrone Digitalsignale umgewandelt werden und daß diese asynchronen Digitalsignale von einerseits mit den Modulations-/Demodulationsmitteln (38) und andererseits mit den Speichermitteln (4) verbundenen asynchronen Sende-/Empfangsmitteln (35) in Digitalsignale, die die Form von eine vorgegebene Anzahl von Bits enthaltenden Wörtern haben, umgewandelt werden.

18. System gemäß Anspruch 17, dadurch gekennzeichnet, daß die asynchronen Sende-/Empfangsmittel (35) und die Modulations-/ Demodulationsmittel (38) ebenfalls mit den Übertragungsmitteln (6) verbunden sind, um die selektiv gespeicherten Informationen umzuwandeln und zu modulieren, wenn diese an den vorgegebenen Empfänger (D) übertragen werden.

19. System gemäß Anspruch 18, dadurch gekennzeichnet, daß die Vorrichtung zur zurückgestellten selektiven Übertragung (1) außerdem Steuer- und Verarbeitungsmittel (30) wie etwa einen Mikroprozessor umfaßt, die über einen Bus (60) mit Strukturspeichermitteln (32) zum Speichern eines Mikroprogramms, mit den Speichermitteln (4) und mit den asynchronen Sende-/Empfangsmitteln (35) verbunden sind und die Analyse- und Auswahlmittel (8) enthalten, um einerseits sowohl die Mittel zum Abhören (3), zum Übertragen (6), zur Modulation/Demodulation (38) und zum asynchronen Senden/Empfangen (38) als auch den Strukturspeicher (32) und den Speicher (4) zu leiten und andererseits die von den asynchronen Sende-/Empfangsmitteln (38) in Form von Wörtern übertragenen Informationen zu analysieren, die vorgegebenen Übertragungsprotokolle zu identifizieren und die Speicheroperationen der Speichermittel (4) und die Übertragungsoperationen der selektiv gespeicherten Informationen zu den vorgegebenen Zeitpunkten an den Empfänger (D) zu steuern.

20. System gemäß Anspruch 19, dadurch gekennzeichnet, daß die Vorrichtung zur zurückgestellten selektiven Übertragung (1) außerdem Zeitgebermittel (34) umfaßt, die über den Bus (60) mit den Steuer- und Verarbeitungsmitteln (30) verbunden sind, um insbesondere in jedem Zeitpunkt das Datum, die Stunde und die Minute zu liefern.

21. System gemäß einem der Ansprüche 17 bis 20 , dadurch gekennzeichnet, daß die Übertragungsmittel (6) Mittel zum Erfassen (43) einer ersten vorgegebenen Frequenz und Wählmittel (40) zum Ausgeben einer den Empfänger (D) bezeichnenden Nummer auf die Telefonleitung umfassen und daß die Mittel zum systematischen Abhören (3) Erfassungsmittel (42) für eine vorgegebene zweite Frequenz zum Erkennen einer Bestätigung der Berücksichtigung der bezeichnenden Nummer und Erfassungsmittel für ein Klingelzeichen (44) zum Erfassen eines einen Anruf von außen angebenden Signals auf der Telefonleitung umfassen.

22. System gemäß Anspruch 21, dadurch gekennzeichnet, daß die Vorrichtung zur zurückgestellten ausgewählten Übertragung (1) außerdem einen die Telefonleitung (2) mit den Wählmitteln (40) und den Modulations-/Demodulationsmitteln (38) verbindenden Sendetransformator (71) aufweist, der am Ausgang an die Telefonleitung (2) eine Impedanz von 600 Ohm aufweist.

23. System gemäß Anspruch 22, dadurch gekennzeichnet, daß die Vorrichtung zur zurückgestellten ausgewählten Übertragung (1) außerdem einen die Telefonleitung (2) mit den Erfassungsmitteln (43) einer vorgegebenen ersten Frequenz, mit den Erfassungsmitteln (42) einer vorgegebenen zweiten Frequenz und mit den Modulations-/Demodulationsmitteln (38) verbindenden Empfangstransformator (70) umfaßt, der am Eingang an die Telefonleitung (2) eine Impedanz aufweist, die größer oder gleich 10 Kiloohm ist.

24. System gemäß Anspruch 23, dadurch gekennzeichnet, daß der Sendetransformator (71) und der Empfangstransformator (70) in Wirklichkeit einen einzigen Transformator bilden, der gleichzeitig das Senden und das Empfangen gewährleistet.

25. System gemäß den Ansprüchen 20 und 21, dadurch gekennzeichnet, daß die Vorrichtung zur zurückgestellten selektiven Übertragung (1) außerdem Eingabe-/Ausgabemittel (36) umfaßt, die einerseits über den Bus (60) mit den Steuer- und Verarbeitungsmitteln (30) und andererseits mit den Erfassungsmitteln (43) einer vorgegebenen ersten Frequenz, mit den Erfassungsmitteln (42) einer vorgegebenen zweiten Frequenz, mit den Wählmitteln (40) und mit den Modulations-/Demodulationsmitteln (38) verbunden sind und an die Wählmittel der Nummer des Empfangers (D) entsprechende vorgegebene Impulszüge liefern, wobei die Erfassungsmittel (42, 43) an die Eingabe-/Ausgabemittel (36) Signale liefern, die die jeweilige Erfassung der ersten bzw. der zweiten vorgegebenen Frequenz angeben.

26. System einem der Ansprüche 23 oder 24, dadurch gekennzeichnet, daß zwischen die Modulations-/Demodulationsmittel (38) und dem Sendetransformator (71) einstellbare Verstärkungsmittel eingesetzt sind, um auf der Telefonleitung (2) einen im wesentlichen konstanten Signalpegel aufrechtzuerhalten.

27. System gemäß einem der Ansprüche 25 oder 26, dadurch gekennzeichnet, daß die Steuer- und Verarbeitungsmittel (30), die Speichermittel (4), die Strukturspeichermittel (32), die Zeitgebermittel (34), die asynchronen Sende-/Empfangsmittel (35) und die Eingabe-/Ausgabemittel (36) integrierte Digitalschaltungen sind.

28. System gemäß Anspruch 27, dadurch gekennzeichnet, daß die Modulations-/Demodulationsmittel (38), die Wählmittel (40), die Erfassungsmittel (43) einer vorgegebenen ersten Frequenz, die Erfassungsmittel (42) einer vorgegebenen zweiten Frequenz und die Klingelzeichenerfassungsmittel (44) spezielle integrierte Schaltungen sind.

29. System gemäß Anspruch 28, dadurch gekennzeichnet, daß die Vorrichtung zur zurückgestellten selektiven Übertragung (1) außerdem Mittel zur Wechselstrom-/Gleichstrom-Umformung (145), die in den integrierten Schaltungen stabilisierte Versorgungsgleichspannung liefern, und Notstromversorgungsmittel (45), beispielsweise einen Kondensator mit sehr hoher Energiespeicherungsdichte, die mit den Umformungsmitteln (145) verbunden sind, um die in den Speichermitteln (4) gespeicherten Informationen und die von den Zeitgebermitteln (34) erzeugten Informationen im Falle einer Unterbrechung der Netzversorgung zu sichern, aüfweist.

30. System gemäß einem der Ansprüche 15 bis 29, dadurch gekennzeichnet, daß die Vorrichtung zur zurückgestellten selektiven Übertragung (1) in einem verschlossenen und gekapselten Gehäuse (1a) enthalten ist und als Verbindungen nach außen besitzt:
- eine Verbindung (2d) mit der Telefonleitung (2),
- einen Eingang für die Netzversorgung (100).

31. System gemäß Anspruch 30, dadurch gekennzeichnet, daß die Vorrichtung zur zurückgestellten selektiven Übertragung (1) außerdem als weitere Verbindung nach außen eine temporäre digitale Verbindung (2c) aufweist, um die in den Speichermitteln (4) selektiv gespeicherten Informationen an die außerhalb der Vorrichtung befindlichen Mittel zum Abgreifen der Daten (200) übertragen zu können, wenn sich die Übertragung von den Übertragungsmitteln (6) über die Telefonleitung (2) als unmöglich erweist.

32. System gemäß einem der Ansprüche 15 bis 31, dadurch gekennzeichnet, daß die besondere Sendevorrichtung (D) ein Befehls-Endgerät (11, 14) und einen Telefonapparat (12), die mit der Telefonleitung (2) verbunden sind, aufweist.

33. System gemäß einem der Ansprüche 15 bis 32, dadurch gekennzeichnet, daß der Empfänger (D) ein Informationsverarbeitungszentrum ist.

## Claims

1. A method of storing and transmitting coded data over a telephone line (2) of a telecommunications network (7), characterised in that it comprises :
- systematic listening-out to the data transmitted over the telephone line ;
- an operation (151) for identifying predetermined transmission protocols, identification of any such protocol leading to :
- selective storage (153, 154) of data transmitted under the identified protocol, and
- an operation (103) for selectively transferring the stored data over the telephone line (2) at predetermined programmed times to an addressee (D) connected to the telecommunications network (7).

2. A selective delay transfer method according to claim 1, characterised in that the predetermined transmission protocols correspond to data exchanges between a specialized transmitting device (E) connected to the telephone line (2) and one or more data-processing units (R₁ .... Rₙ) connected to the network (7).

3. A method according to claim 2, characterised in that in each transfer operation (103) an identification code of the specialized transmitting device (E) is selectively transferred together with the stored data to the predetermined addressee (D).

4. A method according to claim 2 or 3, characterised in that in each transfer operation (103) data relating to the instant of storage are selectively transferred together with the stored data to the predetermined addressee (D).

5. A method according to any of claims 2 to 4, characterised in that in each transfer operation (103) the addressee (D) informs the specialized transmitter (E) of the predetermined start time of the next transfer operation.

6. A method according to any of claims 2 to 5, characterised in that it also comprises an initialisation phase in which the specialized transmitter (E) transmits to the predetermined addressee (D) initialisation data concerning the execution of the method and the material conditions of such execution, and the initialisation phase can be repeated a predetermined number of times spaced apart by a predetermined delay time in the event of communication being impossible.

7. A method according to any of claims 2 to 6, characterised in that if a transfer operation cannot be completed by the programmed time, the transfer operation is reiterated at a call-again time included in a predetermined time slot.

8. A method according to claim 7, characterised in that if the transfer operation cannot be completed at the call-again time the operation is postponed by one day relatively to the programmed time.

9. A method according to any of claims 1 to 8, characterised in that the transfer operation (103) comprises :
- a line-free test (110) of the telephone line (2) followed, if the line is free, by a line seizure (111) ; and
- a looped identification test (112) of a first predetermined frequency followed upon detection thereof :
* by a numbering operation (113) consisting of the transmission over the telephone line (2) of a predetermined pulse or frequency train associated with the addressee (D) ;
* by a looped identification test (114) of a second predetermined frequency followed upon detection thereof :
* by a communication operation (115) between the transmitter device (E) and the addressee (D) during which the selectively stored data are actually transmitted to the addressee (D) under a predetermined protocol ; and
* by an end-of-communication operation (116).

10. A method according to claim 9, characterised in that the looped identification tests (112, 114) for a predetermined first and second frequency have a predetermined duration beyond which the transfer operation is interrupted to be repeated at a predetermined call-again time.

11. A method according to any of claims 2 to 10, characterised in that at the end of identification of a predetermined transmission protocol indicating a data transmission from the specialized transmitter (E) to a predetermined unit (R) of the data-processing units (R₁, ...., Rₙ), the data transmitted under the transmission protocol are stored in a first storage phase (152) and at the end thereof response data transmitted by the data-processing unit (R) to the specialized transmitter (E) are also stored during a second storage phase (155), the total data stored during the communication between the specialized transmitter (E) and the data-processing unit (R₁, ..., Rₙ) forming the selectively stored data.

12. A method according to any of claims 2 to 11, characterised in that the data exchanged between the specialized transmitter (E) and each of the data-processing units (R1, ..., Rn) are transmitted asynchronously at a predetermined first transmission speed and consist of characters.

13. A method according to claims 11 and 12, characterised in that during the first and second storage phases (152, 155) each of the characters forming the exchanged data is awaited for a predetermined wait time, whereafter the first or second storage phase (152, 155) is interrupted and a new protocol identification operation (151) is started.

14. A method according to claim 12 or 13, characterised in that the selective transfers (103) of the stored information to the addressee (D) are carried out in an asynchronous transmission mode at a second predetermined transmission speed.

15. A system for transmitting coded data over a telephone line (2) of a telecommunications network (7), the system comprising a specialized transmitting device (E) connected to the telephone line (2), such device having coded data input means, means for processing the coded data and means for transmitting the same over the telephone line (2) to data-processing units (R₁, ..., Rₙ) connected to the telephone communications network (7), characterised in that it also comprises a selective delay transfer device (1) connected to the telephone line (2), comprising :
- systematic listening-out means (3) connected to the telephone line (2) ;
- analysing and selecting means (8) connected to the listening-out means (3) to select from the data transmitted over the telephone line (2) and listened out by the listening-out means (3) the coded data corresponding to a predetermined transmission protocol ;
- storage means (4) connected to the analysing and selecting means (8) for storing the selected data; and
- transmission means (6) connected to the storage means (4) and to the telephone line (2) for transmitting the previously selected and stored coded data to the addressee (D) at predetermined times.

16. A system according to claim 15, characterised in that the coded data are transmitted asynchronously as modulated analog signals over the telephone line (2).

17. A system according to claim 16, characterised in that the data collected by the systematic listening-out means (3) are converted into asynchronous digital signals by modem means (38) connected to the listening-out means (3), and the asynchronous digital signals are converted into digital word signals comprising a predetermined number of bits by asynchronous transmit receive means (35) connected to the modem means (38) and to the storage means (4).

18. A system according to claim 17, characterised in that the asynchronous transmit-receive means (35) and the modem means (38) are also connected to the transmission means (6) to convert and modulate the selectively stored data during their transfer to the predetermined addressee (D).

19. A system according to claim 18, characterised in that the selective delay transfer device (1) also comprises control and process means (30), such as a microprocessor, connected by a bus (60) to permanent memory means (32) for storing a microprogram, to the storage means (4) and to the asynchronous transmit-receive means (35) and including the analysing and selecting means (8) for on the one hand, managing the listening-out means (3), transmission means (6), modem means (38), asynchronous transmit-receive means (35), permanent memory means (32) and storage means (4) and for, on the other hand, analysing data transmitted in the form of words by the asynchronous transmit-receive means (35), identifying predetermined transmission protocols and controlling storage operations of the storage means (4) and the operations for selectively transferring the stored data to the addressee (D) at the predetermined times.

20. A system according to claim 19, characterised in that the selective delay transfer device (1) also comprises clock means (34) connected to the control and process means (30) by the bus (60) for supplying inter alia the date, hour and minute at any time.

21. A system according to any of claims 17 to 20, characterised in that the transmission means (6) comprises means (43) for detecting a first predetermined frequency and numbering means (40) for transmitting a number associated with the addressee (D) over the telephone line, and the systematic listening-out means (3) comprises means (42) for detecting a second predetermined frequency to identify confirmation of a taking of the addressee's number into account, and ringing detection means (44) to detect on the telephone line a signal indicating an outside call.

22. A system according to claim 21, characterised in that the selective delay transfer device (1) also comprises a transmitting transformer (71) connecting the telephone line (2) to the numbering means (40) and modem means (38), the transmitting transformer (71) having an output impedance of 600 ohms as "seen" from the telephone line (2).

23. A system according to claim 22, characterised in that the selective delay transfer device (1) also comprises a receiving transformer (70) connecting the telephone line (2) to the means (43) for detecting a first predetermined frequency, to the means (42) for detecting a second predetermined frequency and to the modem means (38), the input transformer (70) having an input impedance of at least 10 kiloohms as "seen" from the telephone line (2).

24. a system according to claim 23, characterised in that the transmitting transformer (71) and the receiving transformer (70) are in fact a single transformer for both transmission and reception.

25. A system according to claims 20 and 21, characterised in that the selective delay transfer device (1) also comprises input/output means (36) connected on the one hand to the control and process means (30) by the bus (60) and on the other hand to the means (43) for detecting a first predetermined frequency, to the means (42) for detecting a second predetermined frequency, to the numbering means (40) and to the modem means (38), the input-output means (38) supplying the numbering means with predetermined pulse trains corresponding to the number of the addressee (D), the detecting means (42, 43) delivering to the input-output means (36) signals denoting detection of the first and second predetermined frequencies respectively.

26. A system according to claim 23 or 24, characterised in that variable amplification means (39) are interposed between the modem means (38) and the transmitting transformer (71) for maintaining a substantially constant signal level on the telephone line (2).

27. A system according to claim 25 or 26, characterised in that the monitoring and processing means (30), storage means (4), permanent memory means (32), clock means (34), asynchronous transmit-receive means (35) and input-output means (36) are integrated digital circuits.

28. A system according to claim 27, characterised in that the modem means (38), numbering means (40), means (43) for detecting a first predetermined frequency, means (42) for detecting a second predetermined frequency and the ringing-detection means (44) are specific integrated circuits.

29. A system according to claim 28, characterised in that the selective delay transfer device (1) also comprises rectifying means (145) delivering a regulated DC supply voltage to the integrated circuits, and supply-safeguarding means (45), for example, a very high storage energy density capacitor, connected to the rectifying means (145) to safeguard data stored in the storage means (4) and the data generated by the clock means (34) in the event of a mains power failure.

30. A system according to any of claims 15 to 29, characterised in that the selective delay transfer device (1) is disposed in a closed sealed box (1a) and has the following connections to the exterior :
- a connection (2d) to the telephone line (2) ; and
- a mains supply input (100).

31. A system according to claim 30, characterised in that the selective delay transfer device (1) also comprises, as a further connection to the exterior, a temporary digital link (2c) adapted to transfer to data-collecting means (200) outside the device the data stored selectively in the storage means (4) when transfer by the transmission means (6) over the telephone line (2) is impossible.

32. A system according to any of claims 15 to 31, characterised in that the specialized transmitter (E) comprises a control terminal (11, 14) and a telephone handset (12) connected to the telephone line (2).

33. A system according to any of claims 15 to 32, characterised in that the addressee (D) is a data-processing centre.
